(19) Europäisches Patentamt
European Patent Office
Office européen des brevets

(11) **EP 3 917 001 B1**

(12) **EUROPEAN PATENT SPECIFICATION**

(45) Date of publication and mention
of the grant of the patent:
**02.07.2025 Bulletin 2025/27**

(21) Application number: **21176436.0**

(22) Date of filing: **28.05.2021**

(51) International Patent Classification (IPC):
*H02P 29/64* (2016.01)     *H02P 29/024* (2016.01)

(52) Cooperative Patent Classification (CPC):
**H02P 29/024; H02P 29/64**

(54) **AN ELECTRIC MACHINE UND METHOD FOR CONTROLLING AN ELECTRIC MACHINE**

ELEKTRISCHE MASCHINE UND VERFAHREN ZUR STEUERUNG EINER ELEKTRISCHEN MASCHINE

MACHINE ÉLECTRIQUE ET METHODE DE COMMANDE D'UNE MACHINE ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.05.2020 IN 202041022481**

(43) Date of publication of application:
**01.12.2021 Bulletin 2021/48**

(73) Proprietor: **TVS Motor Company Limited**
**600006 Chennai (IN)**

(72) Inventors:
• **Das, Surajit**
**600 006 Chennai (IN)**

• **Mohan Geddadi, Krishna**
**600 006 Chennai (IN)**
• **Rajendranath, Banda J**
**600 006 Chennai (IN)**

(74) Representative: **Patentanwaltskanzlei Matschnig & Forsthuber OG**
**Biberstraße 22**
**Postfach 36**
**1010 Wien (AT)**

(56) References cited:
**CN-B- 105 490 606     JP-A- 2007 074 796**
**JP-A- 2013 021 857     US-A1- 2018 062 553**

## Description

## TECHNICAL FIELD

The present subject matter generally relates to an electric machine. The present subject matter specifically but not exclusively relates to control the operation of the electric machine of a vehicle.

## BACKGROUND

Electric motor is an essential power source in an electric vehicle or hybrid vehicle. The performance of the motor affects the overall performance of the electric vehicle. An electric motor comprises of a rotor and a stator. The stator includes windings, permanent magnets or metal sheets called laminators. The stator in the electric motor provides a rotary magnetic field to drive the rotary armature.

The electric motor performance directly affects the overall performance of a vehicle or any machine running on electric motor. The electric motor windings heat up when operated under extreme load thereby reducing the efficiency of the vehicle. As such, the propulsion system requires cooling systems, not only for the electric motor but also for the battery banks in order to ensure efficient operation and maximizing the electric components and vehicle lifetime.

## BRIEF DESCRIPTION OF THE DRAWINGS

The detailed description is described with reference to the accompanying figures. The same numbers are used throughout the drawings to reference like features and components.

Fig. 1 illustrates a block diagram of the present subject matter depicting an electric machine.

Fig. 2 illustrates the architecture of the motor control unit of the electric machine.

Fig.3 illustrates the circuit level diagram of the electric motor.

Fig.4 illustrates the flow diagram of the method of controlling the electric machine

## DETAILED DESCRIPTION

It is always necessary that the temperature of the motor does not increase beyond a certain threshold which may affect the drivability of the vehicle. Various means have been used for this purpose such as thermistors or other temperature detectors placed on the motor windings to respond directly to the temperature, or current responsive devices for tripping the motor circuit breaker in response to excessive current which would produce overheating if allowed to continue.

There are resistance measuring devices such as multimeter type instrument which is able to measure the resistance up to 100 Ohms and hence the multimeter type instrument can be optimum for small size machine which may has the phase winding resistance in the range of 10 to 100 Ohm. Larger machines with lower winding resistance use four terminal bridge like Kevin bridge for achieving the accuracy. But Kevin bridge has problems related to high requirement of current for obtaining better sensivity, requirement of manual balancing and also the galvanometer to detect balance condition.

Another known method to measure temperature of the motor winding is by introducing a small direct current component into the motor current which can be done by connecting an asymmetrical resistance device in the motor circuit. The resistance of the motor winding can be determined from measuring the direct current component and the corresponding voltage. But these methods have their own short coming like limit in the range of measuring the resistance along with low precision due to the resistance measurement circuit which compresses the scale at a higher values of the resistance, error prone methods like balancing issues.But the common issue in all the above mentioned methods is the requirement of an additional component to measure the resistance which leads to increase in the cost and also at the same time making the overall system bulky. Also, introducing a new component leads to dependency on the introduced component which reduces the reliability of the motor.

The electric motor uses inbuilt sensor for performing vital function such as detection of phase current and phase voltage and some sensor provided in the electric motor used for measuring the power drawn from the battery to run the electric motor. In order to overcome the above mentioned disadvantages the present subject matter enables the sensors, provided in the electric motor, to measure the resistance in each of the winding by a controller and thereby controlling the operation of the electric motor by generating a high frequency sinusoidal signal and detecting the resistance of each winding. Depending on the resistance, a temperature of the winding is measured and the operation of the electric motor is controlled based on the temperature. The present subject matter, hence, provides an advantage of overcoming the problems mentioned in the prior art like using an extra element, packaging constraint etc.

Further cooling the electric motor in a saddle type two wheeled vehicle which is typically compact in layout, an additional challenge persists which is related to space and packaging constraint. Additionally, the means to provide cooling mechanism adds to the challenge of limited space. Therefore, there exists a challenge of designing a compact, low cost, high reliability electric machine which can safely operate at rated as well as over-rated loads without going into adverse thermal runaway or catastrophic failure.

In a prior art document with application number JP2013021857A, a phase current comparison unit is disclosed. The phase current comparison unit diagnoses a fault of a current sensor on the basis of a comparison result between the estimation value of phase current by the phase current operation unit and the detection value of phase current by the current sensor. However, the prior art does not describe an apparatus or a method of detecting a temperature value of an electric machine.

In another prior art document with application number CN105490606B, a protection method for preventing a permanent magnet synchronous motor from being demagnetized is disclosed. The method comprising calculating a real time stator winding resistance, obtaining a current motor stator temperature value, comparing the obtained motor stator temperature value with a prestored temperature threshold. However, the prior art uses a Clarke transformation formula to determine a current motor stator temperature value. Through this method, receiving the inputs from various sensors and processing of the data becomes very complex to determine current motor stator temperature value. Further, it requires high performance processors to determine a simple parameter. Therefore, there is a requirement to provide a simple solution to determine the temperature value of electric machine.

In yet another prior art document with application number US 20180062553A1, a processor to receive the RMS current values from the plurality of sensors and compute a fault indicator based on the RMS current values, is disclosed. It further discloses a motor temperature being measured by a temperature sensor. However, the present invention aims at determining the temperature value of the electric machine without using any additional temperature sensor.

Hence, in order to overcome the above mentioned challenges the present subject matter provides an electric machine according to claim 1 and a method of controlling an electric machine according to claim 6, wherein the electric machine can detect the temperature of the winding by eliminating the requirement of any additional components such as thermistors to determine the temperature and controlling the starting operation of the electric machine based on the detected temperature and thereby reducing additional cost by eliminating the need of an additional component e.g. a sensor to measure temperature and also providing a compact packaging. Also, if an additional sensor fails the system becomes highly vulnerable and may lead to catastrophic failure like fire, thermal runaway or the rider may get stranded in the middle of a road. Thus, the reliability requirement of the sensor is very high leading to high cost of sensor. Without using an additional component, the reliability of the electric machine operation increases as the electric machine is not dependent on any additional component. Further, the present subject matter enables the driver of the vehicle to know when the electric machine needs repair since over due course of time the resistance of the windings increases and the same would be indicated to the user by the diagnostic system in the controller of the electric machine.

Another aspect of the present subject matter provides a motor control unit to control a power supply to an electric motor. The motor control unit comprises a microcontroller that generates a high frequency sinusoidal current and transfers the high frequency sinusoidal current to one or more phase lines of the electric motor. The sinusoidal current of high frequency is adjusted in close proximity to a rated frequency of the electric machine to get a suitable sinusoidal current.

Still another aspect of the present subject matter provides a microcontroller which enables a plurality of first sensors provided in the electric machine to detect a direct voltage and direct current from a power source supplied to the electric motor. The microcontroller determines a direct current power from the detected values of the direct voltage and the direct current.

Yet another aspect of the subject matter is to provide a microcontroller which enables a plurality of second sensors provided in one or more phase lines of the electric machine to detect one or more phase currents.

Another aspect of the present subject matter is to provide a commutation device such as a MOSFET switching unit also called six pulse half bridge circuit or B6 bridge circuit functioning as a commutation device. The MOSFET switching unit receives the sinusoidal current from the microcontroller and performs the bridge operation. The MOSFET switching unit comprises of one or more bridges connected to said one or more phase lines of the electric motor. Each bridge of the MOSFET switching unit comprises two MOSFET switches to perform switching operation.

Another aspect of the present subject matter is to determine a resistance for said one or more phase lines of the electric motor by processing a root mean square value of one or more phase current of said one or more phase lines and the direct current power from the power source.

Still another aspect of the present subject matter is to determine a current temperature from said resistance and comparing said current temperature with a predetermined temperature (temperature value set by the manufacturer) and controlling the actuation- of the electric motor based on the current temperature of the phase lines.

The above aspects and the associated advantages of the present subject matter will be better understood through following description, appended claims and accompanying drawings.

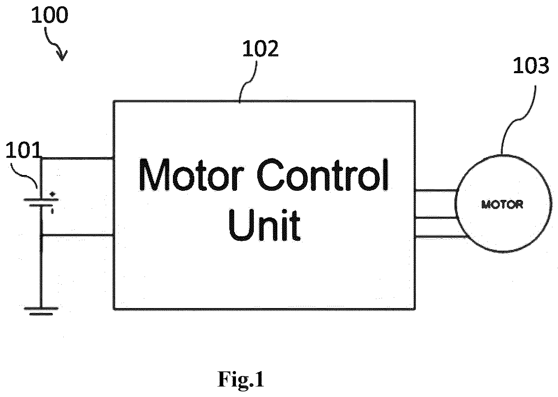

**Fig. 1** illustrates a block diagram of the present subject matter depicting an electric machine (100) comprising a power source (101) such as a battery to drive an electric motor (103). A motor control unit (102) controls the power supply to the electric motor (103).

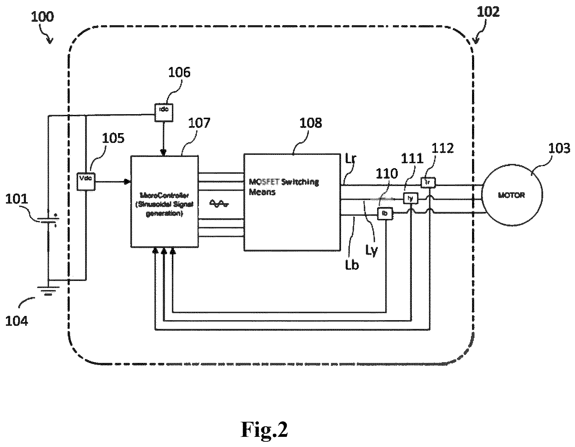

**Fig. 2** illustrates the architecture of the motor control unit (102) of the electric machine (100). The motor control unit (102) is electrically connecting the power source (101) to the electric motor (103). The motor control unit (102) comprises a plurality of first sensors (105,106) adapted to sense a DC voltage ($V_{dc}$) and a DC current ($I_{dc}$). The plurality of first sensors (105,106) are DC voltage sensor (105) connected across the power source (101) to sense the voltage of the power source (101) and the DC current sensor (106) is connected to the positive terminal of the power source (101) to sense the current received from the power source (101) to the electric motor (103).

The plurality of first sensors (105,106) is connected to a microcontroller (107). The microcontroller (107) is adapted to receive input from said plurality of first sensors (105,106) and determines a direct power (P) received from the power source (101) [$P=V_{dc}I_{dc}$]. The plurality of first sensors (105,106) can be either halls based isolated sensors or shunt based sensors.

The microcontroller (107) is capable of generating a high frequency wave of sinusoidal currents. The microcontroller (107) is connected to a MOSFET switching unit (108) and the MOSFET switching unit (108) is controlled by the sinusoidal current generated by the microcontroller (107) to enable a bridge operation (or the MOSFET switching).

By generating and supplying a high frequency of the sinusoidal current, a torque is generated which provides a small movement in the electric motor. The high frequency sinusoidal current generated by the microcontroller (107) which is then supplied to one or more phase lines (Lr, Ly, Lb) of the electric motor (103) after the bridge operation of the MOSFET switching unit (108). Each of the phase lines (Lr, Ly, Lb) connecting the different phases of the electric motor (103) is provided with plurality of second sensors (110,111,112). The plurality of the second sensors (110,111,112) are adapted to sense the high frequency wave of sinusoidal currents (Ir, Iy, Ib) in the each of the phase lines (Lr, Ly, Lb). The sinusoidal current of high frequency is kept in close proximity to the rated frequency of the electric machine to get a high frequency sinusoidal current. The plurality of the second sensors (110,111,112) can be hall based isolated sensors or shunt based sensors

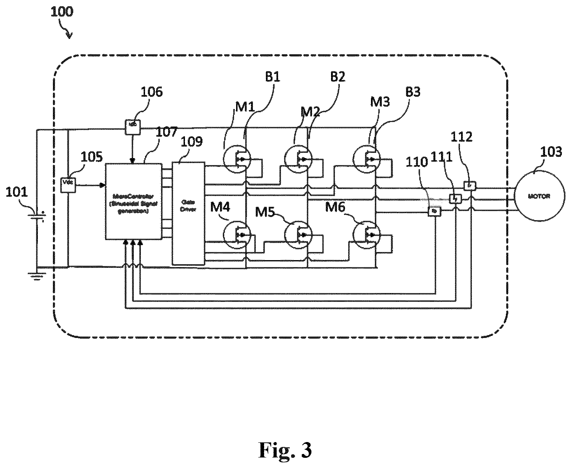

Fig. 3 illustrates the circuit level diagram of the present subject matter. The three-phase excitation winding is disposed in the stator (not shown) of the electric motor (103). The sinusoidal current is provided to the electric motor (103) after the bridge operation of the MOSFET switching unit (108) and plurality of the second sensors (110,111,112) for each phase winding of the electric motor (103) sense the phase current (Ir, Iy, Ib) and sent it to the microcontroller (107) to determine root mean square (rms) value of the phase currents (Ir, Iy, Ib).

The phase windings are connected in a star pattern through one or more MOSFET switches (M1, M2, M3, M4, M5, M6) in the MOSFET switching unit (108). The MOSFET switching unit (108) is also called six pulse half bridge circuit or B6 bridge circuit functioning as a commutation device.

A first bridge (B1) of the MOSFET switching unit (108) comprises M1 and M4 MOSFETS. The central node of the first bridge (B1) connects to a red phase (R) of the electric motor (103). Similarly, a second bridge (B2) of the MOSFET switching unit (108) comprises M2 and M5 MOSFETS and the central node of the second bridge (B2) connects to a yellow phase (Y) of the electric motor (103). A third bridge (B3) of the MOSFET switching unit (108) comprises M3 and M6 MOSFETS and the central node of the third bridge (B3) connects to a blue phase (B) of the electric motor (103).

A gate driver (109) is provided which connects the MOSFET switches (M1, M2, M3, M4, M5, M6) in the MOSFET switching unit (108) to the microcontroller (107). The microcontroller (107) enables the gate driver (109) to actuate the switching of the MOSFET switches (M1, M2, M3, M4, M5, M6) by controlling one or more gate terminals of the MOSFET switches (M1, M2, M3, M4, M5, M6).

The phase current 'Ir' flows through the red phase (R) of the electric motor (103), phase current 'Iy' flow through the yellow phase (Y) of the electric motor (103) and the phase current 'Ib' flows through the blue phase (B) of the electric motor (103).

The microcontroller (107) is adapted to calculate the root means square current ($I_{rms}$) of the phase current (Ir, Iy, Ib) in the plurality of phase lines (Lr, Ly, Lb). Through root mean square current in each phase, the resistance in the phase winding can be determined and based on the value of each phase winding resistance corresponding temperature can be determined based on the temperature co-efficient of the winding material as per following equations of physics.

$$i_\alpha = i_r$$

$$i_\beta = i_r + 2\,i_y$$

$$i_m = \sqrt{i_\alpha^{\,2} + i_\beta^{\,2}}$$

$$P = V_{dc} * I_{dc}$$

$$R = \frac{P}{i_m^{\,2}}$$

$$R = R_{ref}\left[1 + \alpha\left(T - T_{ref}\right)\right]$$

Where 'α' is temperature coefficient of the phase line of the electric motor.

$I_r$ = Current in red phase of the winding

$I_y$= Current in yellow phase of the winding

$I_b$= Current in yellow phase of the winding

$i_\alpha$ = α phase current in two phase stationary reference frame system

$i_\beta$ = β phase current in two phase stationary reference frame system

$i_m$= Root Mean Square value of the motor current (Irms)

$T_{ref}$ = Temperature at which reference motor resistance is measured

$R_{ref}$ = Measured value of motor resistance at temperature $T_{ref}$

P = power dissipated in the motor

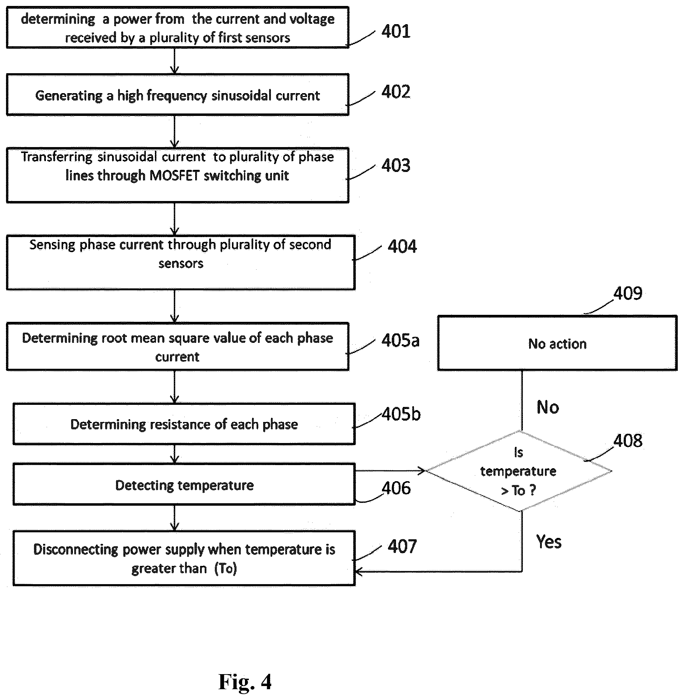

**Fig. 4** illustrates the flow diagram of the method of controlling the electric machine (100). In step 401, a power is determined from the direct voltage (Vdc) and direct current (Idc) detected by the plurality of first sensors (105,106). The direct voltage (Vdc) is detected across the power source (101) and the direct current (Idc) is received by the microcontroller (107) from the power source (101). In step 402, the microcontroller (107) generates a high frequency sinusoidal current. In step 403, the sinusoidal current is transferred to said one or more phase lines (Lr, Ly, Lb) of the electric motor (103) after the bridge operation of the MOSFET switching unit (108).

In step 404, the plurality of the second sensors (110, 111, 112) sense the phase currents (Ir, Iy, Ib) in each phase line (Lr, Ly, Lb) of the electric motor (103). After sensing the phase current (Ir, Iy, Ib), in step 404, the microcontroller (107) determines root mean square values of each phase current, in step 405a, and based on the root mean square current (Irms) of each phase and the direct power (P) determined based on the direct voltage (Vdc) and direct current (Idc) as stated in step 401, corresponding resistance of each phase lines (Lr, Ly, Lb) is determined through calculated direct power (P) and root mean square current (Irms) values in step 405b.

The microcontroller (107) determines the temperature of the electric machine based on the resistance of the phase lines (Lr, Ly, Lb). The temperature increases with the increase in the resistance as the temperature is directly proportional to the resistance and also the temperature coefficient of resistance (α) is positive for a copper material used in the winding of the electric motor (103) which makes the temperature increase with the increase in resistance of the winding as mentioned in the above equation. In step 406, the microcontroller (107) detects a current temperature of the phase lines of the electric motor (103) and in step 408, the microcontroller (107) compares the detected current temperature of the electric motor (103) with a predetermined temperature (To). Then in step 407, if the temperature of the electric motor (103) is found to be greater than the predetermined temperature (To) then the power supply from the power source (101) to the electric motor (103) is disconnected till the time the temperature of the electric motor (103) falls below the predetermined temperature (To). No action is taken in step 209, when the temperature of the electric motor (103) is less than the predetermined temperature (To).

**Claims**

1.   An electric machine (100) comprising:

an electric motor (103), said electric motor (103) being configured to receive a power supply from a power source (101);
a motor control unit (102), said motor control unit (102) being configured to control said power supply from said power source (101) to said electric motor (103);
a commutation device (108), said commutation device (108) being configured to receive a high frequency sinusoidal current from a microcontroller (107), said microcontroller (107) being configured to generate a sinusoidal current to enable excitation of said commutation device;
a plurality of first sensors (105,106), said plurality of first sensors (105,106) being adapted to sense a direct current (Idc) from said power source (101) and a direct voltage (Vdc) across said power source (106); and
a plurality of second sensors (110,111,112), said plurality of second sensors (110,111,112) being connected to one or more phase lines (Lr, Ly, Lb) of said electric motor (103), said plurality of second sensors (110,111,112) being adapted to sense one or more phase currents (Ir, Iy, Ib) **characterised in that**

said microcontroller (107) determines a direct current power (P) through an input received from said plurality of first sensors (105,106),
said microcontroller (107) determines root mean square current (Irms) values for said one or more phase lines (Lr, Ly, Lb) after receiving said one or more phase currents (Ir, Iy, Ib) from said plurality of second sensors (110,111,112),
wherein,

said microcontroller (107) being configured to determine a current temperature based on said direct current power (P) and said root mean square current (Irms) values,

said microcontroller (107) being configured to disconnect a power supply to said electric motor (103), when said current temperature being greater than a predetermined temperature (To).

2. The electric machine as claimed in claim 1, wherein said commutation device (108) being a MOSFET switching unit (108), said MOSFET switching unit (108) being configured to enable a bridge operation.

3. The electric machine as claimed in claim 1, wherein said microcontroller (107) being configured to actuate said electric motor (103) by comparing said current temperatureof said one or more phase lines (Lr, Ly, Lb) with said predetermined temperature (To).

4. The electric machine as claimed in claim 1, wherein said high frequency of said sinusoidal current being in proximity to a frequency rating of said electric motor (103).

5. The electric machine as claimed in claim 1, wherein said MOSFET switching unit (108) comprising a plurality of MOSFET switches (M1, M2, M3, M4, M5, M6), said plurality of MOSFET switches (M1, M2, M3, M4, M5, M6) being configured to form a six-pulse half bridge circuit.

6. A method of controlling an electric machine (100), said method comprising the steps of:

determining a direct current power (P) from a direct current (Idc) and a direct voltage (Vdc), said direct current (Idc) and said direct voltage (Vdc) being detected by a plurality of first sensors (105,106);

generating a high frequency sinusoidal current by a microcontroller (107);

transferring said high frequency sinusoidal current to a plurality of phase lines (Lr, Ly, Lb) through a MOSFET switching unit (108);

sensing one or more phase currents (Ir,Iy,Ib) through a plurality of second sensors (110,111,112);

determining root mean square values of said one or more phase currents (Ir,Iy,Ib), by said microcontroller (107);

detecting a current temperature based on said root mean square values of said one or more phase currents (Ir,Iy,Ib) and said direct current power (P), by said microcontroller (107);

comparing said current temperature with a predetermined temperature (To), by said microcontroller (107); and

disconnecting a power supply to an electric motor (103) when said current temperature being greater than said predetermined temperature (To), by said microcontroller (107).

7. The method of controlling said electric machine (100) as claimed in claim 6, wherein said determining a current temperature comprises the steps of:

processing said root mean square values of said one or more phase currents (Ir,Iy,Ib) and said direct current power (P);

determining a resistance of said plurality of phase lines (Lr, Ly, Lb); and

determining said current temperature from said resistance.

**Patentansprüche**

1. Eine elektrische Maschine (100), die Folgendes umfasst:

einen Elektromotor (103), wobei der Elektromotor (103) so konfiguriert ist, dass er eine Energieversorgung von einer Energiequelle (101) erhält;

eine Motorsteuereinheit (102), wobei die Motorsteuereinheit (102) so konfiguriert ist, dass sie die Energieversorgung von der Energiequelle (101) zum Elektromotor (103) steuert

eine Kommutierungsvorrichtung (108), wobei die Kommutierungsvorrichtung (108) so konfiguriert ist, dass sie einen hochfrequenten sinusförmigen Strom von einem Mikrocontroller (107) empfängt, wobei der Mikrocontroller (107) so konfiguriert ist, dass er einen sinusförmigen Strom erzeugt, um die Erregung der Kommutierungsvorrichtung zu ermöglichen;

eine Vielzahl von ersten Sensoren (105, 106), wobei die Vielzahl von ersten Sensoren (105, 106) dazu ausgelegt ist, einen Gleichstrom (Idc) von der Stromquelle (101) und eine Gleichspannung (Vdc) über der Stromquelle (106) zu erfassen; und

eine Vielzahl von zweiten Sensoren (110, 111, 112), wobei die Vielzahl von zweiten Sensoren (110, 111, 112) mit einer oder mehreren Phasenleitungen (Lr, Ly, Lb) des Elektromotors (103) verbunden ist, wobei die Vielzahl von zweiten Sensoren (110, 111, 112) so ausgelegt ist, dass sie einen oder mehrere Phasenströme (Ir, Iy, Ib) erfassen

**dadurch gekennzeichnet, dass**

der Mikrocontroller (107) eine Gleichstromleistung (P) durch eine von der Vielzahl der ersten Sensoren (105, 106) empfangene Eingabe bestimmt,

der Mikrocontroller (107) die Werte des quadratischen Mittelwerts des Stroms (Irms) für die eine oder mehrere Phasenleitungen (Lr, Ly, Lb) bestimmt, nachdem er den einen oder die mehreren Phasenströme (Ir, Iy, Ib) von der Vielzahl der zweiten Sensoren (110, 111, 112) empfangen hat, wobei,

der Mikrocontroller (107) so konfiguriert ist, dass er eine Stromtemperatur auf der Grundlage der Gleichstromleistung (P) und der Werte des Effektivstroms (Irms) bestimmt,

der Mikrocontroller (107) so konfiguriert ist, dass er die Stromversorgung des Elektromotors (103) unterbricht, wenn die Stromtemperatur größer als eine vorbestimmte Temperatur (To) ist.

2. Elektrische Maschine nach Anspruch 1, wobei die Kommutierungsvorrichtung (108) eine MOSFET-Schalteinheit (108) ist, wobei die MOSFET-Schalteinheit (108) so konfiguriert ist, dass sie einen Brückenbetrieb ermöglicht.

3. Elektrische Maschine nach Anspruch 1, wobei der Mikrocontroller (107) so konfiguriert ist, dass er den Elektromotor (103) durch Vergleichen der aktuellen Temperatur der einen oder mehreren Phasenleitungen (Lr, Ly, Lb) mit der vorbestimmten Temperatur (To) ansteuert.

4. Elektrische Maschine nach Anspruch 1, wobei die hohe Frequenz des sinusförmigen Stroms in der Nähe einer Frequenzleistung des Elektromotors (103) liegt.

5. Elektrische Maschine nach Anspruch 1, wobei die MOSFET-Schalteinheit (108) eine Vielzahl von MOSFET-Schaltern (M1, M2, M3, M4, M5, M6) umfasst, wobei die Vielzahl von MOSFET-Schaltern (M1, M2, M3, M4, M5, M6) so konfiguriert ist, dass sie eine Sechs-Impuls-Halbbrückenschaltung bilden.

6. Verfahren zur Steuerung einer elektrischen Maschine (100), wobei das Verfahren die folgenden Schritte umfasst::

Bestimmen einer Gleichstromleistung (P) aus einem Gleichstrom (Idc) und einer Gleichspannung (Vdc), wobei der Gleichstrom (Idc) und die Gleichspannung (Vdc) durch eine Vielzahl von ersten Sensoren (105, 106) erfasst werden;

Erzeugen eines hochfrequenten sinusförmigen Stroms durch einen Mikrocontroller (107);

Übertragen des hochfrequenten sinusförmigen Stroms an eine Vielzahl von Phasenleitungen (Lr, Ly, Lb) durch eine MOSFET-Schalteinheit (108);

Erfassen eines oder mehrerer Phasenströme (Ir, Iy, Ib) durch eine Vielzahl von zweiten Sensoren (110, 111, 112);

Bestimmen von quadratischen Mittelwerten des einen oder der mehreren Phasenströme (Ir, Iy, Ib) durch den Mikrocontroller (107);

Erfassen einer Stromtemperatur auf der Grundlage der quadratischen Mittelwerte des einen oder der mehreren Phasenströme (Ir, Iy, Ib) und der Gleichstromleistung (P) durch den Mikrocontroller (107);

Vergleichen der aktuellen Temperatur mit einer vorgegebenen Temperatur (To) durch den Mikrocontroller (107); und

Unterbrechen der Stromversorgung eines Elektromotors (103) durch den Mikrocontroller (107), wenn die Stromtemperatur größer ist als die vorgegebene Temperatur (To).

7. Verfahren zur Steuerung der elektrischen Maschine (100) nach Anspruch 6, wobei die Bestimmung einer Stromtemperatur die folgenden Schritte umfasst:

Verarbeiten der quadratischen Mittelwerte des einen oder der mehreren Phasenströme (Ir, Iy, Ib) und der Gleichstromleistung (P);

Bestimmen eines Widerstands der Vielzahl von Phasenleitungen (Lr, Ly, Lb); und

Bestimmen der Stromtemperatur aus dem Widerstand.

**Revendications**

1. Une machine électrique (100) comprenant :

un moteur électrique (103), ledit moteur électrique (103) étant configuré pour recevoir une alimentation électrique provenant d'une source d'alimentation (101) ;

une unité de commande de moteur (102), ladite unité de commande de moteur (102) étant configurée pour contrôler ladite alimentation en énergie de ladite source d'énergie (101) vers ledit moteur électrique (103) ;

un dispositif de commutation (108), ledit dispositif de commutation (108) étant configuré pour recevoir un courant sinusoïdal à haute fréquence d'un microcontrôleur (107), ledit microcontrôleur (107) étant configuré pour générer un courant sinusoïdal afin de permettre l'excitation dudit dispositif de commutation ;

une pluralité de premiers capteurs (105,106), cette pluralité de premiers capteurs (105,106) étant adaptés pour détecter un courant continu (Idc) provenant de ladite source d'énergie (101) et une tension continue (Vdc) à travers ladite source d'énergie (106) ; et

une pluralité de seconds capteurs (110,111,112), ladite pluralité de seconds capteurs (110,111,112) étant connectée à une ou plusieurs lignes de phase (Lr, Ly, Lb) dudit moteur électrique (103), ladite pluralité de seconds capteurs (110,111,112) étant adaptée pour détecter un ou plusieurs courants de phase (Ir, Iy, Ib)

**caractérisé par le fait que**

ledit microcontrôleur (107) détermine une puissance de courant continu (P) par le biais d'une entrée reçue de ladite pluralité de premiers capteurs (105, 106),
ledit microcontrôleur (107) détermine les valeurs de courant quadratique moyen (Irms) pour ladite ou plusieurs lignes de phase (Lr, Ly, Lb) après avoir reçu lesdits courants de phase (Ir, Iy, Ib) de ladite pluralité de seconds capteurs (110,111,112), dans lequel,

ledit microcontrôleur (107) est configuré pour déterminer une température de courant basée sur ladite puissance de courant continu (P) et lesdites valeurs de courant quadratique moyen (Irms),
ledit microcontrôleur (107) étant configuré pour couper l'alimentation électrique dudit moteur électrique (103), lorsque ladite température de courant est supérieure à une température prédéterminée (To).

2. Machine électrique selon la revendication 1, dans laquelle ledit dispositif de commutation (108) est une unité de commutation MOSFET (108), ladite unité de commutation MOSFET (108) étant configurée pour permettre un fonctionnement en pont.

3. Machine électrique selon la revendication 1, dans laquelle ledit microcontrôleur (107) est configuré pour actionner ledit moteur électrique (103) en comparant ladite température actuelle de ladite ou plusieurs lignes de phase (Lr, Ly, Lb) avec ladite température prédéterminée (To).

4. Machine électrique selon la revendication 1, dans laquelle la fréquence élevée du courant sinusoïdal est proche de la fréquence nominale du moteur électrique (103).

5. Machine électrique selon la revendication 1, dans laquelle ladite unité de commutation MOSFET (108) comprend une pluralité de commutateurs MOSFET (M1, M2, M3, M4, M5, M6), ladite pluralité de commutateurs MOSFET (M1, M2, M3, M4, M5, M6) étant configurée pour former un circuit en demi-pont à six impulsions.

6. Procédé de commande d'une machine électrique (100), comprenant les étapes suivantes

déterminer une puissance de courant continu (P) à partir d'un courant continu (Idc) et d'une tension continue (Vdc), ledit courant continu (Idc) et ladite tension continue (Vdc) étant détectés par une pluralité de premiers capteurs (105,106) ;
génération d'un courant sinusoïdal à haute fréquence par un microcontrôleur (107) ;
transférer ce courant sinusoïdal à haute fréquence à plusieurs lignes de phase (Lr, Ly, Lb) par l'intermédiaire d'une unité de commutation MOSFET (108) ;
détection d'un ou de plusieurs courants de phase (Ir, Iy, Ib) par l'intermédiaire d'une pluralité de seconds capteurs (110, 111, 112) ;
déterminer les valeurs moyennes quadratiques de ces courants de phase (Ir, Iy, Ib) par le microcontrôleur (107) ;
détection d'une température actuelle basée sur les valeurs moyennes quadratiques des courants de phase (Ir, Iy, Ib) et sur la puissance du courant continu (P), par le microcontrôleur (107) ;
comparer ladite température actuelle à une température prédéterminée (To), par ledit microcontrôleur (107) ; et
couper l'alimentation d'un moteur électrique (103) lorsque ladite température actuelle est supérieure à ladite température prédéterminée (To), par ledit microcontrôleur (107).

7. Procédé de commande de la machine électrique (100) selon la revendication 6, dans lequel la détermination d'une température de courant comprend les étapes suivantes

traiter les valeurs moyennes quadratiques des courants de phase (Ir, Iy, Ib) et de la puissance du courant continu (P) ;
déterminer une résistance de la pluralité de lignes de phase (Lr, Ly, Lb) ; et
déterminer la température du courant à partir de la résistance.

100

101

102

Motor Control Unit

103

MOTOR

**Fig.1**

**Fig.2**

**Fig. 3**

determining a power from the current and voltage received by a plurality of first sensors 401

Generating a high frequency sinusoidal current 402

Transferring sinusoidal current to plurality of phase lines through MOSFET switching unit 403

Sensing phase current through plurality of second sensors 404

Determining root mean square value of each phase current 405a

Determining resistance of each phase 405b

Detecting temperature 406

Disconnecting power supply when temperature is greater than (To) 407

Is temperature > To ? 408

No action 409

No

Yes

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013021857 A
- CN 105490606 B
- US 20180062553 A1